# EUROPÄISCHE PATENTSCHRIFT

(11) **EP 1 155 494 B1**
(45) Veröffentlichungstag und Bekanntmachung des Hinweises auf die Patenterteilung: **30.10.2002**
(21) Anmeldenummer: 00909057.2
(22) Anmeldetag: 23.02.2000
(51) Int. Cl.: H02M 7/06

(54) **GLEICHRICHTERANORDNUNG, VORZUGSWEISE FÜR EINEN DREHSTROMGENERATOR FÜR KRAFTFAHRZEUGE**
RECTIFIER SYSTEM, PREFERABLY FOR A THREE-PHASE GENERATOR FOR MOTOR VEHICLES
SYSTEME DE REDRESSEUR, DE PREFERENCE POUR ALTERNATEUR A COURANT TRIPHASE POUR AUTOMOBILES

(30) Priorität: 26.02.1999 DE 19908697
(43) Veröffentlichungstag der Anmeldung: 21.11.2001
(73) Patentinhaber: ROBERT BOSCH GMBH, 70442 Stuttgart (DE)
(72) Erfinder: SPITZ, Richard, D-72766 Reutlingen (DE); EIMERS-KLOSE, Doerte, D-72762 Reutlingen (DE); KRAUSS, Hans-Reiner, D-72762 Reutlingen (DE)
(86) Internationale Anmeldenummer: DE0000499
(87) Internationale Veröffentlichungsnummer: WO00052814

(56) Entgegenhaltungen:
- EP-A- 0 372 820
- WO-A-87/00490
- DE-C- 4 225 359
- US-A- 3 739 209
- US-A- 4 866 344
- US-A- 5 200 887

## Beschreibung

### Stand der Technik

Die Erfindung geht aus von einer Dreiphasen-Brückengleichrichteranordnung nach der Gattung des Hauptanspruchs. Aus der DE 42 25 359 C1 sind bereits Dreiphasen-Brückengleichrichteranordnungen mit zwei Halbleiterdioden pro Phase bekannt, bei denen die spannungsstabilisierenden Eigenschaften einzelner Zenerdioden ausgenutzt werden. Bei dieser Art von Spannungsstabilisierung ist jedoch, wenn die Gleichrichteranordnung für höhere Kraftfahrzeug-Bordnetzspannungen von beispielsweise 42 Volt ausgelegt werden soll, die Herstellungstoleranz der Durchbruchspannung der Zenerdioden zu groß, um bei gegebener minimal durchzulassender Welligkeit der Spannung eine zuverlässige Spannungsbegrenzung zu erzielen.

Aus der US-A-3,739,209 sind Breichenshaltungen mit zwei in Reihe geschalteten Dioden bekannt.

### Vorteile der Erfindung

Die erfindungsgemäße Dreiphasen-Brückengleichrichter-Anordnung mit den kennzeichnenden Merkmalen des unabhängigen Anspruchs hat demgegenüber den Vorteil, auch für hohe Bordnetzspannungen eine zuverlässige Spannungsstabilisierung durch die Brückengleichrichteranordnung selbst zu erzielen, insbesondere wird beispielsweise bei einer Betriebsspannung an B+ von 42 Volt und einer maximalen Welligkeit an B+ von 47 Volt zuverlässig eine Spannungsbegrenzung erzielt, sobald die Spannung an B+ einen Wert von 55 Volt erreicht.

Durch die in den abhängigen Ansprüchen aufgeführten Maßnahmen sind vorteilhafte Weiterbildungen und Verbesserungen des im Hauptanspruch angegebenen Gleichrichters möglich.

Insbesondere durch das Vorsehen von Zenerdiodenpaaren wird es möglich, hohe Begrenzungsspannungen mit engen Toleranzbereichen herzustellen.

Insbesondere vorteilhaft ist es auch, große Begrenzungsspannungen durch Integration von mindestens zwei pn-Übergängen in einem einzigen Halbleiterelement in der Form von Drei- oder Vierschichtdioden bereitzustellen. Insbesondere das Problem der Instabilität des Durchbruchs infolge übermäßiger Erwärmung aufgrund des großen Load-Dump-Stroms und positiven Temperaturgangs der Durchbruchsspannung wird unterbunden, da die Spannung kurz nach dem Durchbruch auf einen kleinen Wert abfällt, der dann nur noch erforderlich ist, um das Drei- oder Vierschichtelement im durchgeschalteten Zustand zu belassen.

### Zeichnung

Ausführungsbeispiele der Erfindung sind in der Zeichnung dargestellt und in der nachfolgenden Beschreibung näher erläutert. Es zeigen Figur 1 eine an sich bekannte Gleichrichteranordnung, Figur 2 ein erstes Ausführungsbeispiel, Figur 3 ein zweites Ausführungsbeispiel, Figur 4 ein Strom-Spannungs-Diagramm und Figur 5 ein weiteres Ausführungsbeispiel.

### Beschreibung der Ausführungsbeispiele

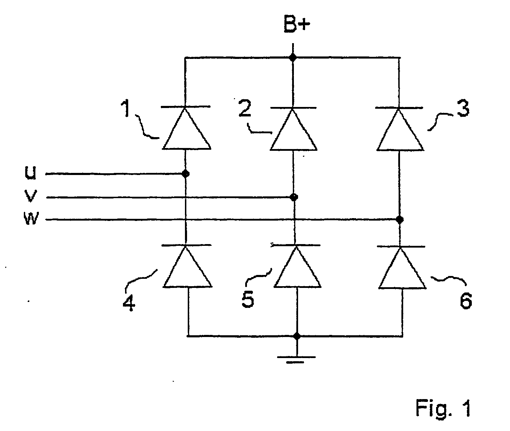

Figur 1 zeigt eine an sich bekannte Dreiphasen-Brückengleichrichteranordnung. Die drei Anschlüsse u, v und w eines Drehstromgenerators sind jeweils mit einem Diodenpaar (1, 4), (2, 5) beziehungsweise (3, 6) verbunden, wobei die Anschlüsse als Mittenabgriff der jeweils in Reihe geschalteten Dioden ausgebildet sind. Die Anoden der Dioden 4, 5 und 6 sind mit Masse verbunden, die Kathoden der Dioden 1, 2 und 3 mit dem Pluspol B+ der Gleichrichteranordnung.

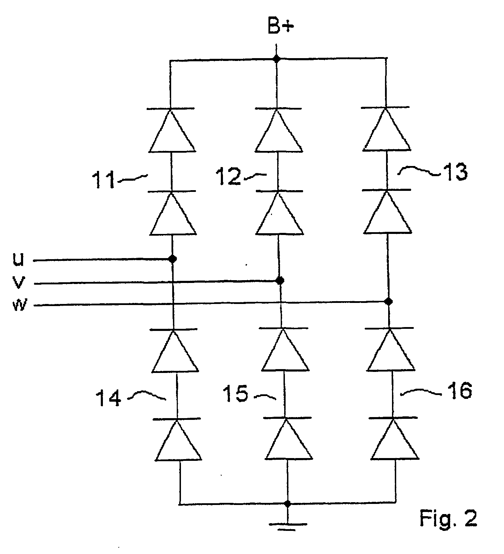

Liegt an den Anschlüssen u,v und w ein Drehstrom an, so wird dieser in einen Gleichstrom umgewandelt, indem die positiven Halbwellen der drei Phasen zum Pluspol abgeleitet werden, die negativen Halbwellen zum Masseanschluß; die jeweils gegenüberliegenden Gleichrichterdioden sind dann hierzu in Sperrichtung gepolt. Spannungsversorgungen für Kraftfahrzeug-Bordnetze mit einer Betriebsspannung an B+ von 14 oder 28 Volt können auf diese Weise mit bekannten Halbleiterdioden bereitgestellt werden. Figur 2 zeigt ein erstes erfindungsgemäßes Ausführungsbeispiel, bei dem im Vergleich zur Figur 1 die Einzeldioden 1 bis 6 durch Paare 11, 12, 13, 14, 15 und 16 von in Reihe geschalteten Dioden ersetzt sind, d.h. die Diodenpaare stellen Schaltungselemente mit zwei in Reihe geschalteten p-n-Übergängen dar.

Mit dieser Anordnung lassen sich Spannungsversorgungen für Kraftfahrzeug-Bordnetze mit einer Betriebsspannung an B+ von 42 Volt verwirklichen. Die Gleichrichteranordnung erlaubt eine (durch die Spulenanordnung des Drehstromgenerators bedingte) Welligkeit von 47 Volt an B+ und begrenzt gleichzeitig die Spannung an B+ auf maximal 55 Volt. Hierzu sind beispielsweise mindestens die Dioden der Paare 14, 15 und 16 als Zenerdioden ausgebildet, so daß zwischen jeder Kombination von zwei der drei Drehstromphasen mindestens ein Strompfad mit zwei antiseriell geschalteten Zenerdioden-Paaren angeordnet ist. Dadurch wird in jeder Phasenlage des Drehstroms sichergestellt, daß, bei entsprechend eingestellter Durchbruchspannung der einzelnen Zenerdioden, die Betriebsspannung an B+ einen Wert von 55 Volt nicht übersteigt, indem bei Bedarf das betreffende Zenerdiodenpaar "durchbricht", also die betreffenden beiden Drehstromphasen kurzschließt. Mit einzelnen Zenerdioden statt Zenerdiodenpaaren ist dies nur schwer möglich, wenn beispielsweise die Zenerdioden eine maximale Welligkeit an B+ von mindestens 47 Volt noch an B+ weiterleiten sollen, gleichzeitig aber die vorgegebene Grenze zur Spannungsbegrenzung relativ nahe an 47 Volt (beispielsweise die oben genannten 55 Volt) liegt. Die Herstellungstoleranz für Durchbruchspannungen bei Zenerdioden beträgt typischerweise 6 Volt, deckt also beispielsweise einen Bereich von 47 bis 53 Volt ab. Der tatsächliche Durchbruch erfolgt jedoch bei höheren Spannungen, da der Innenwiderstand in Sperrichtung bei einer Zenerdiode mit einer derartig hohen Durchbruchspannung entsprechend hoch ist und einen zusätzlichen Spannungsabfall verursacht, der bei Einleitung des Zenerdioden-Durchbruchs aufgebracht werden muß. Außerdem fließen insbesondere beim Kraftfahrzeug über längere Zeiten große Ströme durch die Dioden, die die Zenerdioden erwärmen. Dadurch wiederum erhöht sich der an sich schon hohe Innenwiderstand der Zenerdioden in Sperrichtung, ferner hat auch die Durchbruchspannung bei Avalanchedioden einen positiven Temperaturgang, wodurch sich die für den Durchbruch erforderliche Spannung nochmals erhöht. Zuguterletzt fließen beim Durchbruch selbst, also im Falle des "Load-Dump", große Ströme, die die Durchbruchspannung infolge des genannten positiven Temperaturgangs erhöhen können, so daß die Durchbruchspannung weiter ansteigt. Die erfindungsgemäße Anordnung hingegen vermeidet diese Schwierigkeiten, indem die Durchbruchspannung als Summe zweier halb so großer Durchbruchspannungen von in Reihe geschalteten Zenerdioden eines Zenerdiodenpaares 14, 15 beziehungsweise 16 realisiert ist. Die Einzeldioden weisen beispielsweise eine Durchbruchspannung von 24,5 Volt im Mittel auf, bei einer ebenfalls halbierten Toleranz von +/- 1,5 Volt. Die resultierende Durchbruchspannung des Diodenpaares liegt dann in einem Bereich von 47 Volt bis 51 Volt, hat also einen Toleranzbereich von √2 x 3 Volt, das sind zirka 4 Volt. Das ist ein um 2 Volt reduzierter Toleranzbereich gegenüber einer Einzeldiode, die für sich alleine bereits die geforderte Durchbruchspannung bereitstellen würde. Darüber hinaus wird der beim Load-Dump in Sperrichtung fließende große Strom in jeder Diode des betreffenden Diodenpaars nur die halbe Verlustleistung erzeugen, die Temperatur des pn-Übergangs liegt deutlich niedriger. Wegen der halbierten Durchbruchspannung ist auch der Innenwiderstand der Diode reduziert. Im Ergebnis kann somit die Forderung nach 55 Volt als maximaler Spannung in einfacher Weise erfüllt werden. In einer abgewandelten Ausführungsform sind die Diodenpaare 11, 12 und 13 durch hochsperrende Einzeldioden mit einer Durchbruchspannung von beispielsweise größer als 60 Volt ersetzt. Die Spannungsbegrenzung wird weiterhin durch die Zenerdiodenpaare 14, 15 und 16 gewährleistet. In einer weiteren Ausführungsform sind die Diodenpaare 11, 12, und 13 ebenfalls wie die Diodenpaare 14, 15 und 16 als Zenerdiodenpaare mit entsprechender Durchbruchspannung ausgebildet. In diesem Fall liegen zwischen jeder Kombination von zwei der drei Drehstromphasen zwei Strompfade mit jeweils zwei antiseriell geschalteten Zenerdioden-Paaren, so daß bei einer Überspannung zwischen zwei Phasen des Drehstroms zwei Durchbruchpfade geöffnet werden können, wodurch sich der Strom je Diode reduziert und somit der Temperatureinfluß auf die Durchbruchspannung nochmals verkleinert wird.

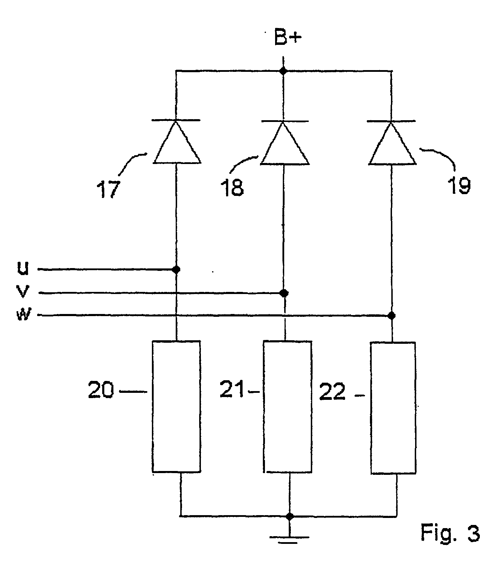

Figur 3 zeigt ein weiteres erfindungsgemäßes Ausführungsbeispiel, bei dem im Vergleich zur Figur 1 die Einzeldioden 1 bis 3 durch hochsperrende Dioden 17, 18 und 19 mit einer Durchbruchspannung größer als 55 Volt gebildet werden und die Einzeldioden 4 bis 6 durch Halbleiter-Gleichrichterelemente 20, 21 und 22 ersetzt sind. Die Gleichrichterelemente 20, 21 und 22 werden jeweils durch eine Vierschichtdiode mit Kathodenkurzschluß gebildet, wobei die Anode jeder Vierschichtdiode mit dem Masseanschluß verbunden ist. Eine Vierschichtdiode ist bekanntermaßen durch eine pnpn-Halbleiter-Schichtenfolge mit Kathodenkurzschluß gebildet und stellt eine Reihenschaltung von drei p-n-Übergängen dar. Jeder Vierschichtdiode antiparallelgeschaltet zwischen dem Masseanschluß und dem jeweiligen Phasenanschluß u, v beziehungsweise w ist eine hochsperrende Diode vom Typ der Dioden auf der Pluspolseite B+ der Gleichrichteranordnung.

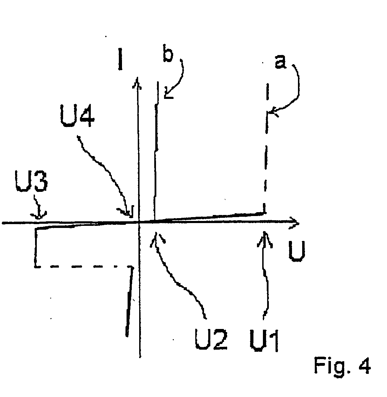

Zur Erläuterung der Funktionsweise der Anordnung nach Figur 3 zeigt Figur 4 ein Strom-Spannungsdiagramm (I-U-Diagramm) a einer Vierschichtdiode und ein Strom-Spannungsdiagramm b eines Gleichrichterelements 20, 21 bzw. 22. In Durchlaßrichtung schaltet die Vierschichtdiode erst bei einer Spannung U1 (zum Beispiel 50 Volt) durch, daher ist beim Gleichrichterelement eine hochsperrende Diode zur Vierschichtdiode parallelgeschaltet, um bei Durchlaßpolung (negative Spannung an der Kathode des Vierschichtelements) Durchlaß durch das Gleichrichterelement zu gewährleisten wie bei einer normalen Zweischichtdiode mit nur einem p-n-Übergang (Kurve b, Durchlaßspannung U2). Bei Polung in Sperrichtung hingegen steigt der Strom durch die Vierschichtdiode bzw. das Gleichrichterelement ab einer Kippspannung U3 (zum Beispiel -50 Volt) stark an, die Vierschichtdiode bricht durch und die Spannung sinkt bei beibehaltenem durchgeschalteten Zustand in Sperrichtung auf einen sehr kleinen Wert U4 (zum Beispiel -1 bis -2 Volt).

Der Wert des Stroms bei diesem Kippen der Spannung ist der sogenannte Kippstrom. Der Wert der Kippspannung U3 und des Kippstroms kann durch entsprechende Dimensionierung der Vierschichtdiode gewählt werden. Das Erfordernis einer Spannungsbegrenzung auf 55 Volt kann mit den erfindungsgemäß im Gleichrichter eingesetzten Gleichrichterelementen somit leicht erfüllt werden. Gegenüber einer Anordnung nach Figur 2 werden statt 12 nur 9 Halbleiterdiodenchips benötigt und somit statt 6 nur 3 mehr als bei dem bekannten Aufbau nach Figur 1 für Niedervolt-Bordnetze. Während bei der Lösung nach Figur 2 die Verlustleistung in Flußrichtung der Dioden gegenüber dem bekannten Aufbau nach Figur 1 durch die doppelte Diodenanzahl verdoppelt ist, liegt die Verlustleistung aufgrund einer kleineren Anzahl von Diodenchips niedriger. Darüberhinaus ist bei der Gleichrichterfunktion von Vorteil, daß beim Durchbruch der Gleichrichterelemente die Spannung stark absinkt, somit zusätzlich weniger Verlustleistung anfällt und dadurch die Durchbruchspannung genauer festlegbar ist. In einer abgewandelten Ausführungsform können die Gleichrichterelemente 20, 21 und 22 mit den hochsperrenden Dioden 17, 18 und 19 vertauscht werden. Auch bei dieser abgewandelten Anordnung ist für jede Kombination von zwei der drei Drehstromphasen mindestens ein durch zwei antiseriell geschaltete Gleichrichterelemente gegebener Durchbruchstrompfad gewährleistet. In einer anderen abgewandelten Ausführungsform der Figur 3 werden die Gleichrichterelemente 20, 21 und 22 statt durch Parallelschaltungen von Vierschichtdioden ("Thyristordioden") mit hochsperrenden Dioden durch Dreischichtdioden ("Transistordioden") gebildet. Jedes Gleichrichterelement wird also durch eine Dreischichtdiode gebildet. Eine Dreischichtdiode wird bekanntermaßen durch eine pnp-Halbleiter-Schichtenfolge mit Kathodenkurzschluß gebildet und stellt eine Reihenschaltung von zwei p-n-Übergängen dar. Eine Dreischichtdiode weist bekanntermaßen bereits eine I-U-Kennlinie der Form b in Figur 4 auf, eine zusätzliche Beschaltung mit einer parallelgeschalteten hochsperrenden Diode erübrigt sich also. Bei einer Dreischichtdiode liegt U4 typischerweise bei - 15 V. In dieser abgewandelten Ausführungsform werden für das Hochvolt-Bordnetz somit insgesamt nur noch sechs Halbleiterchips benötigt.

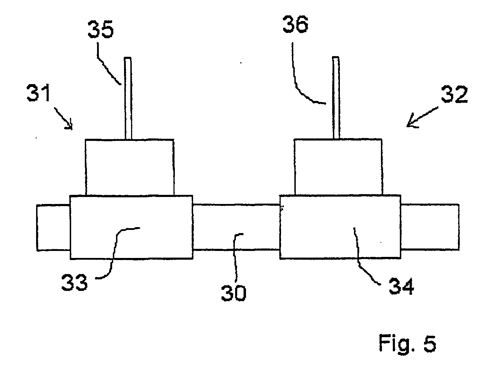

Figur 5 zeigt in einer Seitenansicht den mechanischen Aufbau eines Diodenpaares 11, 12, 13, 14, 15 oder 16. Jede Einzeldiode eines Diodenpaares ist als Einpreßdiode 31 beziehungsweise 32 mit einem Einpreßsockel 33 bzw. 34 ausgebildet. Der Halbleiterchip ist im Inneren des abgebildeten Diodengehäuses angeordnet (nicht abgebildet) und von außen über den Kopfdraht 35 bzw. 36 und den Einpreßsockel 33 bzw. 34 kontaktierbar. Die beiden Einpreßsockel sind elektrisch leitend über das Aluminiumkühlblech 30 verbunden, in das die Einpreßsockel in zwei der Form der Einpreßsockel angepaßte Öffnungen eingepreßt sind.

Zur Realisierung einer Reihenschaltung der Einzeldioden sind die Halbleiterchips in den Einpreßdioden 31 und 32 mit vertauschten Oberflächenorientierungen angeordnet, so daß über das Kühlblech die Kathode der einen Diode mit der Anode der anderen Diode elektrisch in Verbindung steht. Die Kopfdrähte sind gemäß Figur 2 elektrisch mit den Drehstromanschlüssen bzw. den Polen (Masseanschluß bzw. B+) des Bordnetzes verbunden (in Figur 5 nicht dargestellt). Der komplette Gleichrichter nach Figur 2 setzt sich dann aus sechs gleichen Kühlblechanordnungen gemäß Figur 5 zusammen, wobei die sechs Kühlbleche beispielsweise auf einer Verbindungsplatte aus Kunststoff fixiert und die Verbindungen zwischen den Kühlblechanordnungen im Kunststoff eingespritzt werden.

Die Kühlblechanordnung gemäß Figur 5 ist auch für die Realisierung eines Gleichrichterelements 20, 21 oder 22 gemäß Figur 3 verwendbar, indem in der Einpreßdiode 31 ein Halbleiterchip mit einer Vierschichtdiode und in der Einpreßdiode 32 ein Halbleiterchip mit einer hochsperrenden Diode angeordnet wird. Die Anode der Diode ist beispielsweise über das Kühlblech mit der Kathode der Vierschichtdiode elektrisch verbunden, die entgegengesetzten Elektroden müssen dann über die Kopfdrähte miteinander kontaktiert und mit der betreffenden Drehstromphase verbunden werden (nicht eingezeichnet in Figur 5).

Alternativ zur Figur 5 kann der mechanische Aufbau eines Diodenpaares 11 bis 16 auch unter Verzicht auf ein Kühlblech 30 ausgeführt werden, indem eine Reihenschaltung von zwei Halbleiterdiodenchips innerhalb eines einzigen Diodengehäuses einer Einpreßdiode angeordnet wird. Dadurch wird es möglich, diese in Form jeweils einer einzigen Einpreßdiode realisierten Diodenpaare in bereits bekannten Gleichrichter-Kühlblechanordnungen einzusetzen, indem einfach die Einpreßdioden mit einem einzigen Halbleiterchip im Innern durch die neuen Einpreßdioden ersetzt werden. Der Strompfad durch die neuen Einpreßdioden verläuft dabei vom Einpreßsockel über einen Lotbereich zum ersten Diodenchip, von dort über einen weiteren Lotbereich, der den ersten mit dem darüber angeordneten zweiten Diodenchip verbindet, zum zweiten Diodenchip und von dort über einen weiteren Lotbereich zum Kopfdraht. Dieses Gebilde kann wie bei der bekannten Anordnung mit nur einem Diodenchip in einem üblichen Lötofen verlötet werden.

## Patentansprüche

1. Dreiphasen-Brückengleichrichteranordnung mit drei Gleichrichterpfaden, in denen jeweils zwei Gleichrichterelemente in Reihe liegen, wobei jeder Gleichrichterpfad zwischen den Gleichrichterelementen mit einer von drei Leitungen eines Drehstromanschlusses (u,v,w) verbindbar ist, wobei die drei dem Drehstromanschluß gegenüberliegenden Kathoden-Anschlüsse der Gleichrichterelemente zu einem Pluspol (B+) und die drei dem Drehstromanschluß gegenüberliegenden Anoden-Anschlüsse der Gleichrichterelemente zu einem Minuspol zusammengeschaltet sind, **dadurch gekennzeichnet, daß** mindestens drei der Gleichrichterelemente durch zweipolige Halbleitergleichrichter (11, 12, 13, 14, 15, 16; 11, 12, 13, 20, 21, 22) mit mindestens zwei in Reihe geschalteten p-n-Übergangen gebildet werden, wobei die mit dem Pluspol oder die mit dem Minuspol verbundenen Halbleitergleichrichter durch zwei in Reihe geschaltete und als Zenerdioden ausgebildete Halbleiterdioden (11, 12, 13, 14, 15, 16) gebildet werden.

2. Gleichrichteranordnung nach Anspruch 1, **dadurch gekennzeichnet, daß** die mit dem Minuspol verbundenen Halbleitergleichrichter durch jeweils eine Antiparallelschaltung einer Vierschichtdiode mit einer hochsperrenden Diode gebildet werden.

3. Gleichrichteranordnung nach einem der Ansprüche 1 oder 2, **dadurch gekennzeichnet, daß** die mit dem Minuspol verbundenen Halbleitergleichrichter durch jeweils eine Dreischichtdiode gebildet werden.

4. Gleichrichteranordnung nach Anspruch 1, **dadurch gekennzeichnet, daß** die in Reihe geschalteten Halbleiterdioden (11, 12, 13, 14, 15, 16) aus jeweils zwei Halbleiterchips bestehen, wobei die Halbleiterchips aufeinander gelötet und in einem gemeinsamen Diodengehäuse untergebracht sind.

## Claims

1. Three-phase bridge rectifier arrangement having three rectifier paths, in each of which two rectifier elements are connected in series, in which case each rectifier path between the rectifier elements can be connected to one of three lines of a three-phase connection (u,v,w), with the three cathode connections (which are opposite the three-phase connection) of the rectifier elements being connected to a positive pole (B+), and the three anode connections (which are opposite the three-phase connection) of the rectifier elements being connected to a negative pole, **characterized in that** at least three of the rectifier elements are formed by two-pole semiconductor rectifiers (11, 12, 13, 14, 15, 16; 11, 12, 13, 20, 21, 22) with at least two series-connected p-n junctions, with the semiconductor rectifiers which are connected to the positive pole or the semiconductor rectifiers which are connected to the negative pole being formed by two series-connected semiconductor diodes (11, 12, 13, 14, 15, 16) in the form of Zener diodes.

2. Rectifier arrangement according to Claim 1, **characterized in that** the semiconductor rectifiers which are connected to the negative pole are each formed by a back-to-back parallel circuit comprising a four-layer diode with a high blocking-capability diode.

3. Rectifier arrangement according to one of Claims 1 or 2, **characterized in that** the semiconductor rectifiers which are connected to the negative pole are each formed by a three-layer diode.

4. Rectifier arrangement according to Claim 1, **characterized in that** the series-connected semiconductor diodes (11, 12, 13, 14, 15, 16) each comprise two semiconductor chips, with the semiconductor chips being soldered to one another and being accommodated in a common diode housing.

## Revendications

1. Installation de redresseur à pont triphasé comportant trois chemins de redressement dans lesquels on a chaque fois deux éléments redresseurs en série et chaque chemin redresseur est relié entre les éléments redresseurs avec l'une des trois lignes d'un branchement de courant alternatif (u, v, w), les trois bornes de cathodes à l'opposé des branchements de courant alternatif pour les éléments redresseurs étant reliées au pole positif (B+) et les trois bornes d'anodes à l'opposé du branchement de courant alternatif des éléments redresseurs étant réunies sur le pole négatif,
**caractérisée en ce que**
au moins trois des éléments redresseurs sont formés par des redresseurs semi-conducteurs bipolaires (11, 12, 13, 14, 15, 16 ; 11, 12, 13, 20, 21, 22) avec au moins deux jonctions (pn) branchées en série, les redresseurs semi-conducteurs reliés au pole + ou au pole - étant formés par deux diodes semi-conductrices (11, 12, 13, 14, 15, 16) réalisées sous la forme de diodes Zener branchées en série.

2. Montage redresseur selon la revendication 1,
**caractérisé en ce que**
les redresseurs semi-conducteurs reliés au pole négatif sont formés chaque fois par un montage anti-parallèle d'une diode à quatre couches et d'une diode à fort pouvoir bloquant.

3. Montage redresseur selon l'une des revendications 1 ou 2,
**caractérisé en ce que**
les redresseurs semi-conducteurs reliés au pole négatif sont formés chaque fois par une diode à trois couches.

4. Montage redresseur selon la revendication 1,
**caractérisé en ce que**
les diodes semi-conductrices (11, 12, 13, 14, 15, 16) branchées en série sont formées chaque fois de deux puces semi-conductrices, les puces semi-conductrices étant soudées l'une sur l'autre et logées dans un boîtier de diodes commun.
